# EUROPEAN PATENT SPECIFICATION

(11) **EP 2 017 589 B1**
(45) Date of publication and mention of the grant of the patent: **08.05.2019**
(21) Application number: 08011910.0
(22) Date of filing: 02.07.2008
(51) Int. Cl.: G01G 19/414, G01G 19/00

(54) **Weighing apparatus to measure the weight of articles fed along a processing path**
Wiegevorrichtung zum Messen des Gewichts von Artikeln, die entlang eines Verarbeitungspfads zugeführt werden
Appareil de pesage pour mesurer le poids des articles introduits le long d'une voie de traitement

(30) Priority: 20.07.2007 US 824670
(43) Date of publication of application: 21.01.2009
(73) Proprietor: Pitney Bowes, Inc., Shelton, CT 06484 (US)
(72) Inventor: Fairweather, James A., Milford, CT 06460 (US); Joyce, Steven H., Wallingford, CT 06492 (US); Lyga, Thomas M., Southbury, CT 06488 (US)
(74) Representative: Hoffmann Eitle

(56) References cited:
- EP-A1- 0 953 828
- WO-A1-02/27281
- US-A- 5 990 422
- US-B1- 6 433 288
- US-B1- 6 940 025

## Description

The present invention relates to apparatus for measuring weight, and, more particularly, to a new and useful apparatus for measuring article weight while optimizing the throughput of articles processed by a sheet handling/processing device.

Various fabrication apparatus employ weigh stations for processing relatively thin sheet material. In the context used herein, sheet material may include mailing envelopes, sheets of paper or cardstock, web material, woven fabric, composite laminates, etc., One such apparatus is a mailing machine which processes mailing envelopes (i.e., a form of sheet material) to apply postage indicia based upon mailpiece weight.

Mailing machines perform a variety of operations including feeding, folding, inserting content material, sealing, weighing, and printing (i.e., printing the address information and postage indicia on the envelope). Generally, these steps are performed sequentially, i.e., serially, by various processing stations dedicated to the particular operation. Principle among these processing steps, are the weighing of the mailpiece and the printing of postage indicia based upon the mailpiece weight. That is, since the cost of mailing has historically been based upon the weight of the mailpiece, most conventional mailing machines will minimally include a weighing and printing station to perform these functions.

The efficiency of a mailing machine is typically measured by the number of mailpieces (i.e., those of a conventional size such as number ten (10) mailing envelopes) processed per unit time. For example, modern mailing machines are typically capable of processing one hundred (100) to one-hundred and thirty (130) mailpieces/minute depending upon the complexity of the mailpiece job run. Moreover, if the weight of a mailpiece is known, the requirement to weigh the mailpiece can be eliminated, hence the mailpieces can be processed more rapidly, e.g., two hundred and sixty (260) mailpieces per minute. If, however, each mailpiece must be weighed then processing occurs more slowly, e.g., at a rate of one hundred and thirty (130) mailpieces per minute.

The processing speed is also impacted by the required spacing between mailpieces and ability to move one mailpiece independent of another. With respect to the spacing between mailpieces, it will be appreciated that mailpieces spaced in twelve inch (12") increments will take longer to process than mailpieces spaced at six inch (6') increments. While it is desirable to minimize the spacing between envelopes, the spatial relationships and size requirements imposed by the various processing stations imposes significant design limitations which tend to increase the required spacing.

WO 02/272781 A1 describes a weighing system for weighing articles conveyed on a conveyor comprising at least a first and second belt unit. The weighing system comprises at least a first and second weighing cell supporting the first and second belt unit, respectively, and adapted to provide data of the weight of one or more articles being supported by said belt units. The system comprises a control system that comprises detecting means for providing data of at least the location of one or more edges of the article on the conveyor. A processor unit for processing data obtained from said detecting means and weighing cells and for determining at least a weight of the article(s) and storing said determining weight is provided.

EP 0 953 828 A1 describes an apparatus for measuring weights of articles having different shapes and weights successively transported on a conveyer including first and second weighing conveyers having load cells to produce weight signals and photo-sensors arranged at inlets and outlets of the weighing conveyers for detecting passage of the articles to produce article detection signals.

US 6 433 288 B1 describes a conveyor weighing unit for weighing objects transported along a conveyor. The conveyor is driven in a revolving manner over a weighing device. The weighing device includes two or more weighing platforms, each platform having a pre-defined platform length. Each weighing platform continuously weighs the conveyor belt section placed thereover and the object transported thereon. One or more adjacent weighing plateforms constitutes a weighing unit having a total platform length equal or greater than the object length to be weighed. The weighing platforms are operatively connected to a data processing unit, which receives and processes data from the weighing platforms, and based thereupon, determines the length and weight of the object. An accordingly appropriate number of adjacent platforms are selected having an added length at least equal to a length of the object to be weighed to thereby enable minimal spacing between adjacent objects and maximum operational capacity.

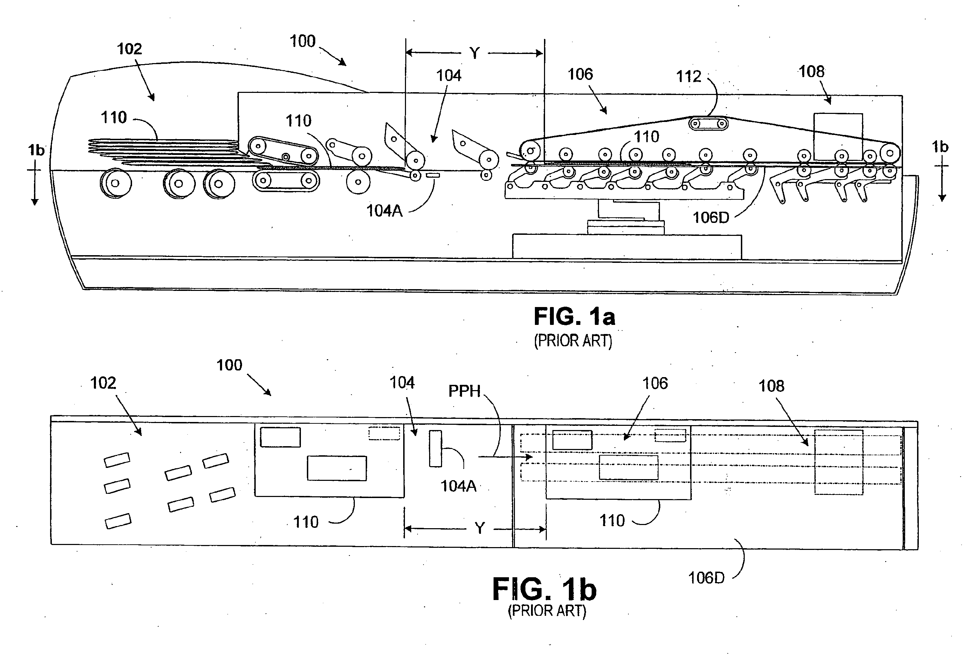

Figs. 1a and 1b represent profile and plan views, respectively, of a prior art mailing machine 100 including a feeding station 102, a sealing station 104, a weighing station 106 and a printing station 108. The various stations 102, 104, 106, 108 are adapted to process mailpieces 110 ranging in size from (i) a post card size sheet (3.5 inches x 5 inches), (ii) conventional No.10-type envelopes for holding standard C- or Z- folded letter-size sheets of material, and (iii) even larger flats-type envelopes for containing standard unfolded sheet material. Consequently, the deck 106D of the weighing station 106 is configured to span a length sufficient to hold both envelope types.

Furthermore, certain stations, such as the sealing station 104 do not facilitate/permit the intermittent pausing of an envelope at any desired location but require that a mailpiece 110 be (i) positioned in advance of the station i.e., in queue awaiting the processing of other downstream stations or (ii) fully processed by the station. For example, it can be detrimental to the sealing operation for a moistening applicator or nozzle 104A (best seen in Fig. 1b) to sit idly upon the flap (not shown) of the mailpieces 110. Hence, the transport of mailpieces 110 along the processing path PPH must be controlled to await the completion of the weighing operation before initiating the sealing operation, i.e., at the sealing station 104.

Additionally, while it can be desirable to combine structural elements of a mailing machine to (i) perform dual functions and (ii) reduce the number of parts to assemble/maintain, these seemingly synergistic structural combinations can further limit processing throughput. This is especially true in connection with the use of conveyor belts and rollers to transport mailpieces 110 along the processing path PPH. For example, in Fig. 1a, a single upper belt 112 spans the decks 106D, 108D of the weighing and print stations 106, 108 to transport mailpieces 110 across both stations 106, 108. While the single belt 112 provides the motive force for transporting the mailpieces 110 across both stations 106, 108 (i.e., saving component, assembly and maintenance costs), the transport functions of both are integrally connected irrespective the processing speeds attainable by one or the other of the stations 106, 108. That is, an upstream mailpiece 110A cannot be weighed by the weigh station 106 until processing of the downstream mailpiece 110B is completed by the printing station 108, and vice versa.

Finally, it will be appreciated that, in addition to the deck 106D of the weighing station 106 spanning a length sufficient to accommodate various mailpiece configurations, the deck 106D also spans the length of the print station 108. As such, a single structural platform is fabricated/machined to decrease manufacturing costs. While this adaptation may enable closer mailpiece spacing, it has the effect of decreasing throughput by increasing the time required to weigh a mailpiece. More specifically, the time required to weigh a mailpiece 110 is a function of the "settling time", or the time required for the station deck 106D to dampen oscillations induced by the introduction of a mailpiece 110. That is, an accurate reading of weight can only be obtained when oscillations induced by the mailpiece 110 (i.e., each time a mailpiece is loaded and removed from the deck 110D) is damped below a threshold value (i.e., amplitude).

Inasmuch as the amplitude of weigh station oscillations is a function of the total mass of the spring/mass system (i.e., including, inter alia, the mailpiece 110, the deck 106D, rollers 106R and the upper belt 112), any additional or unnecessary mass will prolong the settling time, and, consequently, the time required to achieve an accurate weight measurement. Therefore, adaptations made to the weigh station 106 to incorporate a single elongated belt 112 or deck 106D can adversely impact the time to weigh a mailpiece 110, in addition to the processing throughput of the mailing machine 100.

A need, therefore, exists for a mailing machine which increases throughput while flexibly accommodating mailpieces of varied size and shape.

According to the present invention, there is provided a weighing apparatus as set out in Claim 1.

The accompanying drawings illustrate presently preferred embodiments of the invention, and, together with the general description given above and the detailed description given below, serve to explain the principles of the invention. As shown throughout the drawings, like reference numerals designate like or corresponding parts.

In the drawings:
Figure 1a is a partially broken-away and sectioned side view of a prior art mailing machine including a feeder, sealing, weighing, and printing station;
Figure 1b is a top view of the prior art mailing machine for visually illustrating the spatial relationship between mailpieces and the impact of such spacing on throughput/mailpiece processing;
Figure 2 is a partially broken-away and sectioned side view of a mailing machine including a multi-segment weighing apparatus according to an embodiment of the present invention;
Figure 3 is an enlarged profile view of the multi-segment weighing apparatus according to an embodiment of the present invention including primary and secondary scale segments;
Figure 4a is a top view of the multi-segment weighing apparatus wherein the primary scale segment weighs a mailpiece of a first configuration while the secondary scale segment stages a subsequent mailpiece in preparation for being weighed by the primary scale segment;
Figure 4b is a top view of the multi-segment weighing apparatus wherein the primary and secondary scale segments cooperate to jointly weigh a larger mailpiece of a second configuration;
Figures 5a and 5b depict an alternate embodiment of the multi-segment weighing apparatus wherein the deck of the secondary scale segment lies adjacent to the primary scale segment on two sides thereof;
Figures 6a and 6b depict an alternate embodiment of the multi-segment weighing apparatus wherein the deck of the secondary scale segment partially circumscribes the primary scale segment on three sides thereof;
Figures 7a and 7b depicts an alternate embodiment of the multi-segment weighing apparatus having a primary scale segment and a pair of secondary scale segments and wherein one of the secondary scale segments is disposed aft of the primary scale segment and another of the secondary scale segments is disposed along side the primary scale segment;
Figures 8a and 8b are plan and profile views, respectively, of the mailing machine wherein the segmented weighing apparatus is shown in a first operating mode for processing conventional type-ten, mailing envelopes;
Figures 9a and 9b are plan and profile views, respectively, of the mailing machine wherein the segmented weighing apparatus is shown in a second operating mode for processing larger, flats-type, mailing envelopes;
Figure 10a shows the resonant response of a prior art weighing device wherein vibrations dampen over a settling period before an accurate weight measurement can be recorded; and
Figure 10b shows the resonant response of the multi-segment weighing apparatus according to an embodiment of the present invention wherein vibrations dampen over an abbreviated settling period due to the reduced mass of each scale segment.

The following describes a weighing apparatus and method to measure the weight of articles fed along a processing path. The weighing apparatus includes multiple segments, i.e., a primary scale segment adapted to weigh articles of a first configuration, and at least one secondary scale segment adapted to cooperate with the primary segment to weigh articles of a second configuration. The articles of the second configuration are larger than those of the first configuration in at least one dimension or direction. Inasmuch as the articles are fed along a processing path, a conveyor or transport means is provided to feed the articles to the scale segments. The conveyor may be controlled to momentarily pause the articles over each scale segment to obtain an accurate weight measurement.

The inventive weighing apparatus and method for processing sheet material is described in the context of a mailing machine such as a DM 800, DM 900 and DM 1000 Model Mailing Machines produced by Pitney Bowes Inc., located in Stamford, State of Connecticut, USA, but nevertheless the invention may be employed in any sheet handling apparatus, mailpiece inserter and/or postage apparatus wherein sheet material, whether mailpieces, paper, card stock, laminates, or building material, is weighed-on-the-way® ("weigh-on-the-way" is a registered trademark of Pitney Bowes Inc., Stamford, CT. USA) for further processing. The necessity to weigh the sheet material may be required to determine how the sheet material will be subsequently processed. For example, in a mailing machine, the weight of an envelope determines the value of the indicia printed for postage/delivery purposes. In other sheet handling equipment, the weight of an article may determine which cutting blades will be needed to cut/shear the sheet material or which processing path the material will follow, i.e., downstream of the weighing apparatus.

In the broadest sense of the invention, a weighing apparatus is provided to measure the weight of articles fed along a processing path. The weighing apparatus includes multiple segments, i.e., a primary scale segment adapted to weigh articles of a first configuration, and at least one secondary scale segment adapted to cooperate with the primary segment to weigh articles of a second configuration. Generally, the articles of the second configuration are larger than those of the first configuration in at least one dimension or direction. Inasmuch as the articles are fed along a processing path, a conveyor or transport means is provided to feed the articles to the scale segments. The conveyor may be controlled to momentarily pause the articles over each scale segment to obtain an accurate weight measurement.

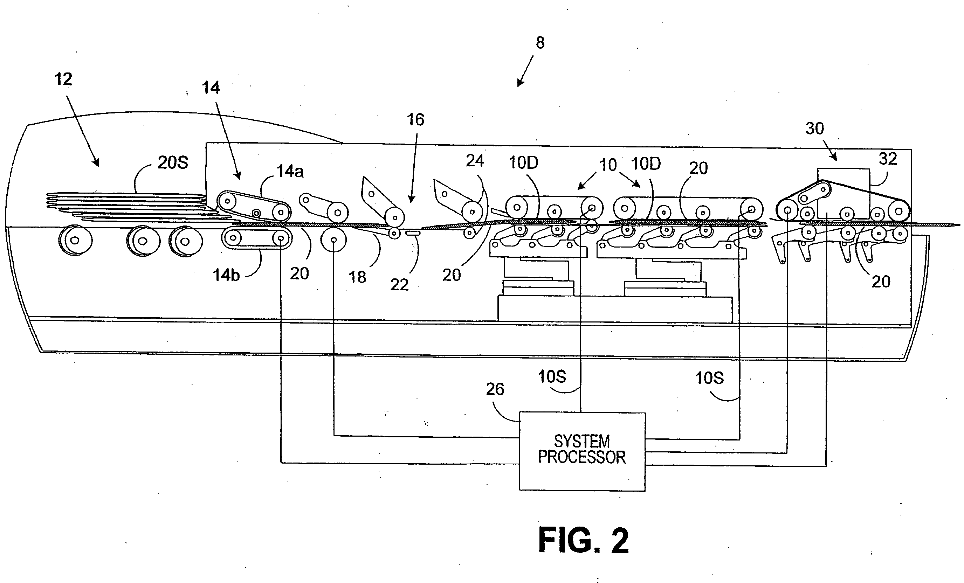

In Fig. 2, a mailing machine 8 incorporates a weighing apparatus 10 (also referred to as a "weight measurement apparatus") according to the teachings of the present invention. Before discussing the weighing apparatus 10 in greater detail, a brief description of the mailing machine 8, including its upstream and downstream elements, is provided. The mailing machine 8 includes a feeder assembly 12 having a singulator section 14 and a sealing module 16 for processing mailpieces along a feed path (hereinafter referred to as the "processing path"). In the context used herein the "processing path" is the path along which the sheet material is directed for processing, whether the sheet material is supported on a smooth deck, via rollers, nips, or belts. The singulator section 14, receives stacked mailpieces 20S and singulates/separates the lowermost mailpiece from the stack 20S. As the mailpieces 20 are driven along the processing path, the lowermost mailpieces 20 are shingled through a pair of belts 14a, 14b which, in cross section, define a shallow-V configuration. At the vertex formed by the belts 14a, 14b, a small gap enables a single mailpiece 20 to pass or separate from the mailpiece stack 20S.

The single mailpiece 20 is then passed to the moistening/sealing module 16 wherein a blade 18 direct the underlying mailpiece flap (not shown) to a moistening applicator/nozzle 22 (depending upon the type of moistening/sealing module). As the flap of each mailpiece 20 passes the applicator or nozzle 22, an aqueous solution (including water and an anti-bacterial agent) moistens the flap sealant (also not shown) to activate the adhesive contained therein. Thereafter, the mailpiece 20 passes between a pair of closing nips 24 to seal the flap against the body of the mailpiece envelope. While the closing nips 24 are shown immediately following the moistening applicator 22, the closing nips may be disposed at any downstream location. Inasmuch as flap sealant is activated by a thin film of solution, i.e., as the mailpiece 20 passes the applicator/nozzle 22, it is generally undesirable for the flap to remain in contact with the applicator/nozzle 22 for more than the time necessary to apply the film. Hence, if mailpieces 20 must be momentarily paused to perform a particular operation, the system processor 26, which controls the various transport functions of the mailing machine 8, positions the mailpieces 20 immediately upstream or downstream of the applicator/nozzle 22. As such, idle contact of the flap sealant with the aqueous solution of the moistening/sealing module 16 is obviated.

The mailpieces 20 are then conveyed to the weighing apparatus 10 for measuring delivery weight. That is, since the cost of delivery is typically based on mailpiece weight, the weighing apparatus 10 functions to rapidly and accurately measure mailpiece weight as the mailpiece continues along the processing path. Depending upon the configuration of the mailpiece, e.g., number ten (10) or flats-type, the mailpiece will come to rest on the deck 10D of the weighing apparatus 10. Vibrations, produced by accelerating and decelerating the mailpiece across the weighing apparatus, necessitate that the apparatus "settle-out" or achieve a threshold level of stability before generating or recording a weight measurement signal. The system processor 26 is responsive to the weight signal 10S and calculates the value of the indicia required for postage.

Thereafter, the mailpieces 20 are transported to the print station 30 where the mailpieces 20 are urged upwardly against a platen to ensure a planar surface for printing. Print heads 32, extending through the platen, print the postage indicia on the envelope in addition to other symbology, e.g., one or two-dimensional barcodes, planet codes, or address information as may be required.

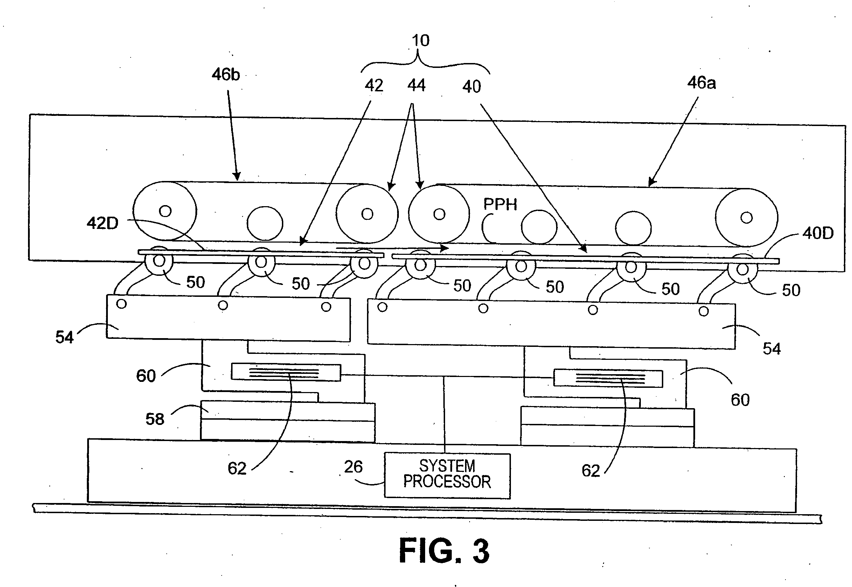

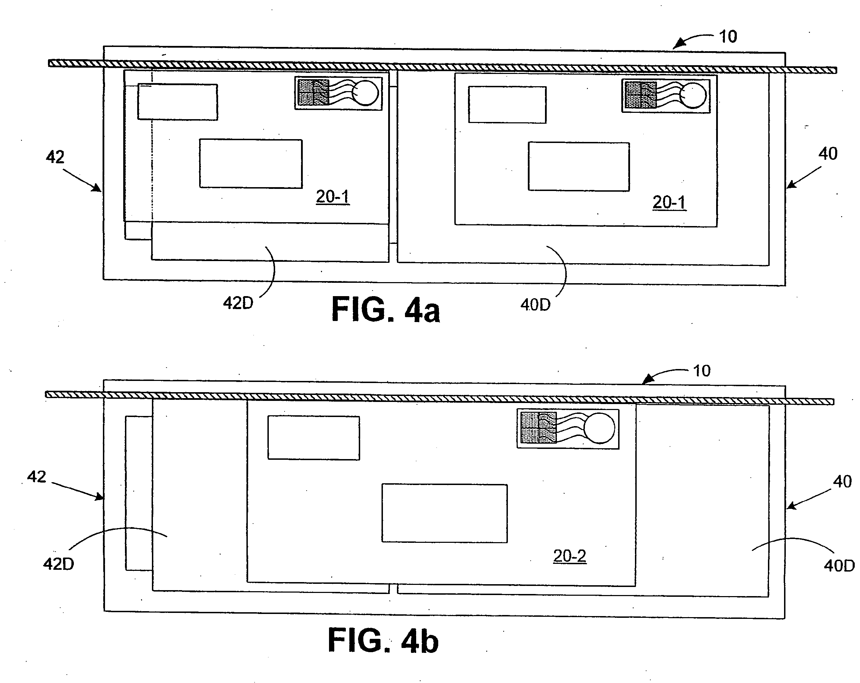

Figs. 3, 4a and 4b depict enlarged profile and plan views of the weighing apparatus 10. The weight measurement apparatus 10 comprises multiple segments 40, 42 including a primary scale segment 40, a secondary scale segment 42 and a conveyor means 44 for transporting mailpieces 20 to the scale segments 40, 42. In the described embodiment, the primary scale segment 40 is adapted to weigh mailpieces 20-1 of a first configuration (seen in Fig. 4a) while the secondary scale segment 42 is adapted to cooperate with the primary segment to weigh mailpieces 20-2 of a second configuration (seen in Fig. 4b). Further, the conveyor means 44 includes first and second belt drive assemblies 46a, 46b associated with the primary and secondary scale segments 40, 42, respectively. These belt drive assemblies 46a, 46b may be driven independently or in unison depending upon the operating mode of the weighing apparatus 10. Hence, mailpieces 20-1, 20-2 may be independently moved across the individual scale segments 40, 42 or moved in unison across both scale segments 40, 42. Furthermore, the belt drive assemblies 46a, 46b define drive surfaces which are substantially coplanar for driving the mailpieces smoothly from one scale segment 42 to the other scale segment 40.

Before discussing the various operating modes of the inventive weight measurement apparatus 10, a brief description of the scale segments 40, 42 is provided. Inasmuch as each of the scale segments 40, 42 is essentially identical, but for the size and/or the geometric shape of the respective decks 40D, 42D, it will be appreciated that the following description of the primary scale segment 40 is equally valid for and applicable to the secondary scale segment 42. Hence, for brevity of description, the primary scale segment 40 will be described in detail while reference to the secondary scale segment 42 will generally be limited to its spatial and geometric relationship relative to the primary scale segment 40.

The primary scale segment 40 includes a substantially planar transport deck 40D disposed along the processing path PPH of the mailing machine 8. The deck 40D is mounted to support structure (not shown) surrounding a plurality of spring-biased rollers 50 which extend upwardly through slot-shaped openings in the deck 40D. The rollers 50 are supported by arms 52 which are pivotally mounted to a connecting base 54. The base 54 is mounted to and supported by a structure/system 56 capable of measuring deflections due to weight. For example, a load cell may be interposed between the connecting base 54 and a stationary structural housing 58 of the mailing machine 8. In one form, the load cell may be implemented or replaced by a cantilever spring 60 may be affixed at each end to the base 54 and housing 58 while a strain gage 62 may be disposed on the face or surface of the cantilever spring 60.

Mailpieces conveyed along the processing path PPH by the conveyor means 44 are decelerated and accelerated as they are (i) positioned on the deck 40D, (ii) held momentarily (i.e., until a weight measurement can be taken) and, (iii) once again, conveyed downstream to the print station (not shown in Fig. 3). Inasmuch as these motions induce vibrations, the scale segments 40, 42 must await a "settling period" to ensure that an accurate weight measurement signal may be obtained and processed by the system processor 26. As vibratory oscillations dampen to a threshold level, the deflection of the connecting base can be measured by the load cell or a strain gage (whichever weight measurement sensor is employed) and interpreted by the system processor 26.

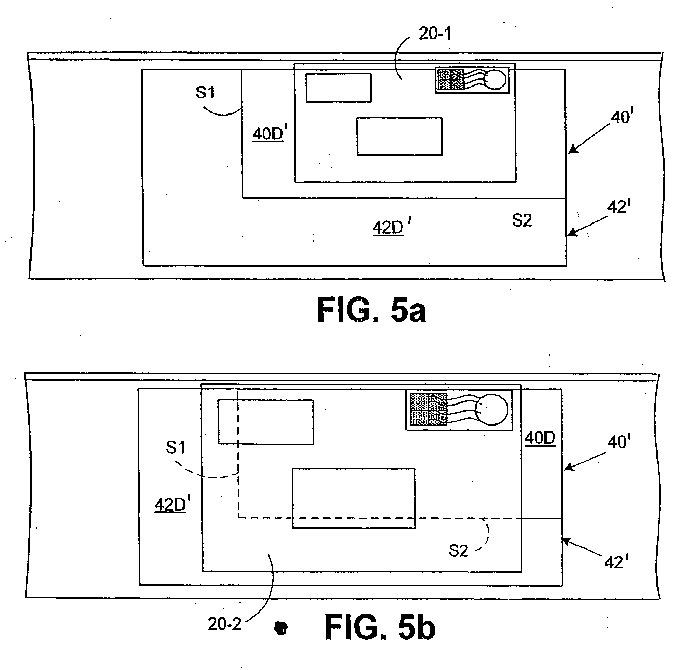

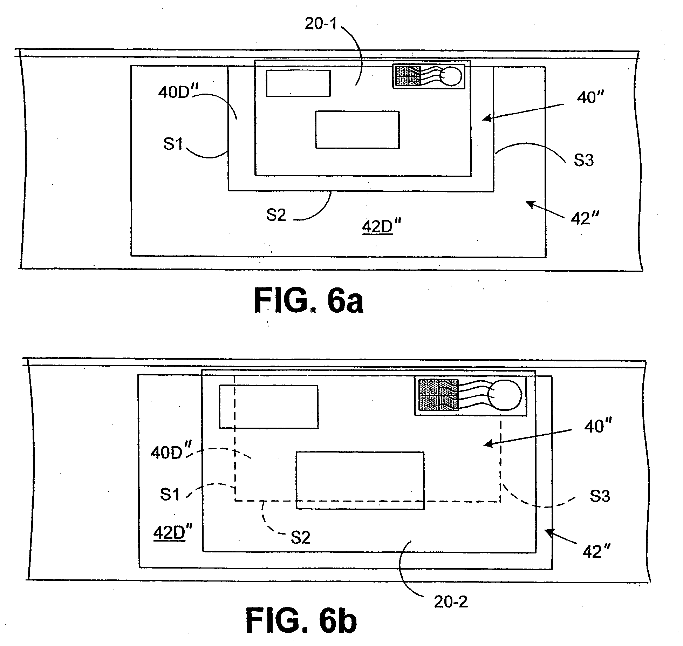

The transport decks 40D, 42D of the primary and secondary scale segments 40, 42 are substantially coplanar, though the spring-biased rollers 50 enable a degree of skewing/compliance to accommodate variations in thickness from one mailpiece to another. While the decks 40D, 42D are substantially rectangular in shape and arranged in tandem order, the decks 40D, 42D may have other geometric shapes or be arranged in a variety of spatial relationships. For example, in Figs. 5a and 5b, the deck 42D' of a secondary scale segment 42' may be adjacent the deck 40D' of the primary scale segment 40' along two sides S1, S2 thereof. The deck 40D' of the primary scale segment 40' may be sized to accommodate mailpieces 20-1 of a first configuration, e.g., a type-ten letter envelope (seen in Fig. 5a), while the dimension of the combined decks 40D', 42D' (shown in Fig. 5b) associated with the primary and secondary scale segments 40', 42' is adapted to support a larger mailpiece 20-2 of a second configuration, e.g., a number ten (10) type letter envelope. In another example shown in Figs. 6a and 6b , the deck 42D" of a secondary scale segment 42' may partially circumscribe the deck 40D" of the primary scale segment 40' along three sides S1, S2 and S3 thereof. In Fig. 6a, the periphery of the conventional letter-size envelope 20-1 is bounded by the deck 40D" of the primary scale segment 40". In Fig. 6b, the larger flats-type letter envelope 20-2 is accommodated by the dimension of the combined decks 40D", 42D" (shown in Fig. 6b) associated with the primary and secondary scale segments 40", 42".

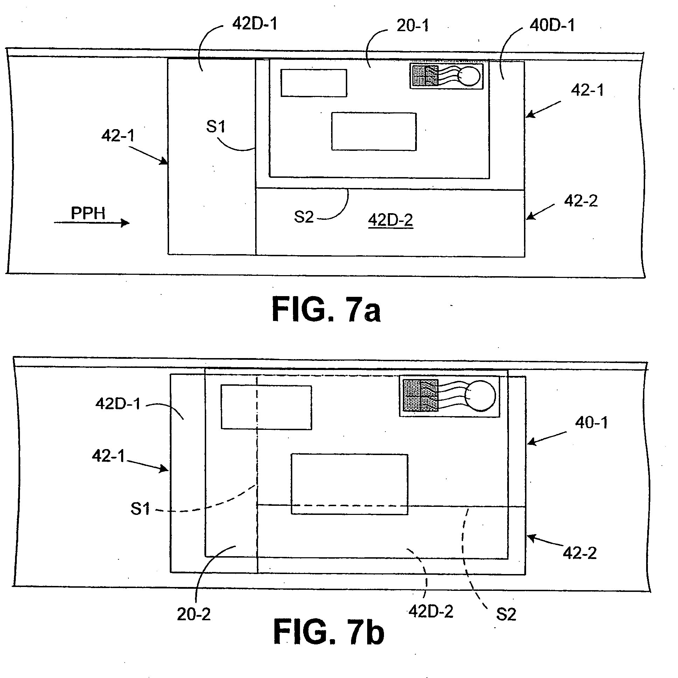

In yet another embodiment of the invention illustrated in Figs. 7a and 7b, three decks 40D-1, 42D-1 and 42D-2 are associated with multiple scale segments 40-1, 42-1 and 42-2, respectively. More specifically, the inventive weight measurement apparatus includes one primary scale segment 40-1 and a pair of secondary scale segments 42-1, 42-2, wherein one of the secondary scale segments 42-1 is disposed along a first side S1 of the primary scale segment 40-1 and another of the secondary scale segments 42-2 is disposed along a second side S2 of the primary scale segment 40-1.

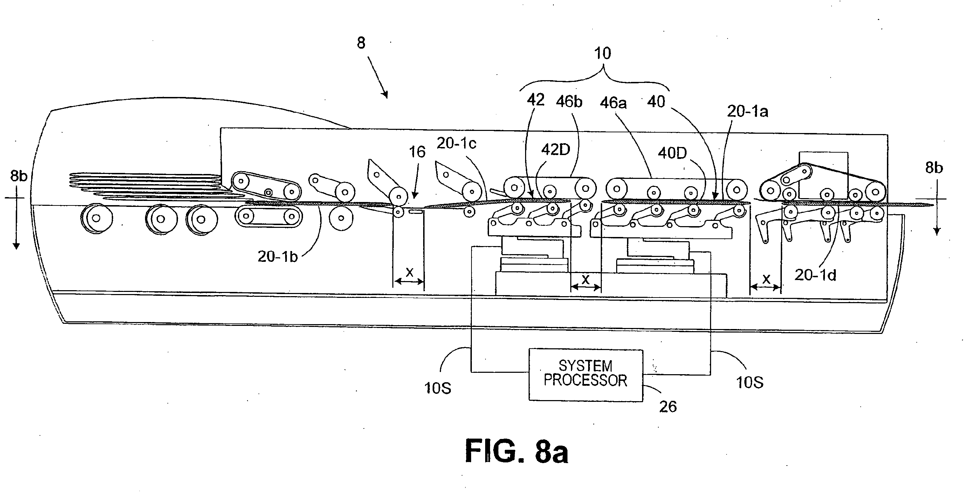

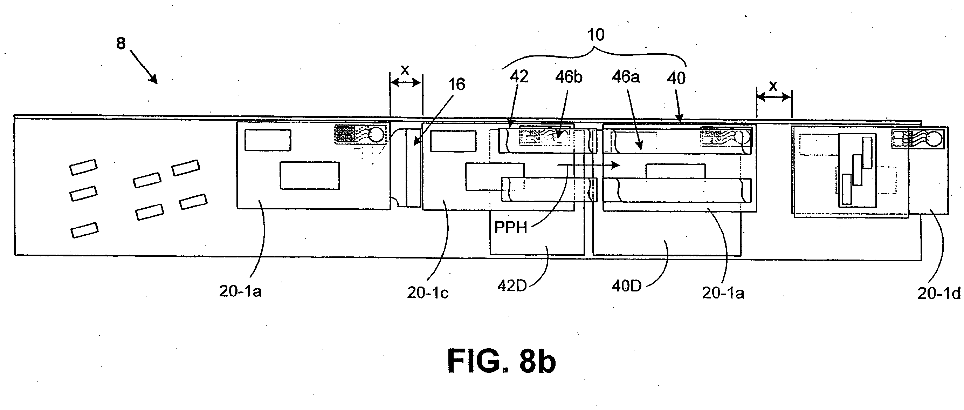

In the context of a mailing machine 8, the inventive weight measurement apparatus 10 weighs mailpieces 20-1, 20-2 in one of at least two operating modes. These operating modes increase throughput efficiency while enabling the flexibility to weigh articles of varying size or shape. The flow and spacing of mailpieces 20-1a, 20-1b, 20-1c, 20-1d, in a first operating mode is depicted in Figs. 8a and 8b. In this operating mode, mailpieces 20-1a, 20-1b, 20-1c, 20-1d of a first configuration/size, i.e., those employing number ten (10) letter-size envelopes, are closely-spaced to achieve a high throughput efficiency. i.e., in excess of two-hundred and forty (240) mailpieces per minute. In this operating mode, the primary scale segment 40 weighs each of the mailpieces 20-1a, 20-1b, 20-1c, 20-1d traveling along the processing path PPH. At the same time, the mailpieces 20-1b immediately upstream of the mailpiece 20-1a being weighed by the primary scale segment 20 is staged on the deck 42D of the secondary scale segment 42. Accordingly, in this operating mode, the secondary scale segment 42 and its associated drive assembly 46b, functions in the sole capacity of staging/preparing the next mailpiece 20-1b for weight measurement and the printing of postage indicia. To complete mailpiece processing, the deflection of the primary scale segment 40 is issued, measured and converted by the system processor 26 to a weight signal 10S. The weight signal 10S, in turn, is used to calculate a postage value needed for mailpiece carrier delivery. The postage indicia and other printed subject matter/symbology, i.e., the destination, return address and barcode symbols, are printed at the print station 30.

While, in the first operating mode, the secondary scale segment 42 is essentially non-functional in terms of its ability to measure the weight of mailpieces 20-1a, 20-1b, 20-1c, 20-1d, the ability to stage mailpieces 20-1a, 20-1b, 20-1c, 20-1d greatly decreases the spacing X between processed mailpieces 20-1a, 20-1b, 20-1c, 20-1d and vastly increases throughput efficiency. That is, since a mailpiece 20-1b can be staged on the deck 42D of the secondary scale segment 42 immediately adjacent the forward or downstream mailpiece 20-1a, an additional mailpiece 20-1b can be interposed between the moistening/sealing station 16 and the primary scale segment 40. As such, by increasing the number of mailpieces processed along the processing path PPH from three (3) to four (4) (at the same time maintaining a constant transport velocity), throughput efficiency can be raised by significantly, e.g., thirty-three percent (33%).

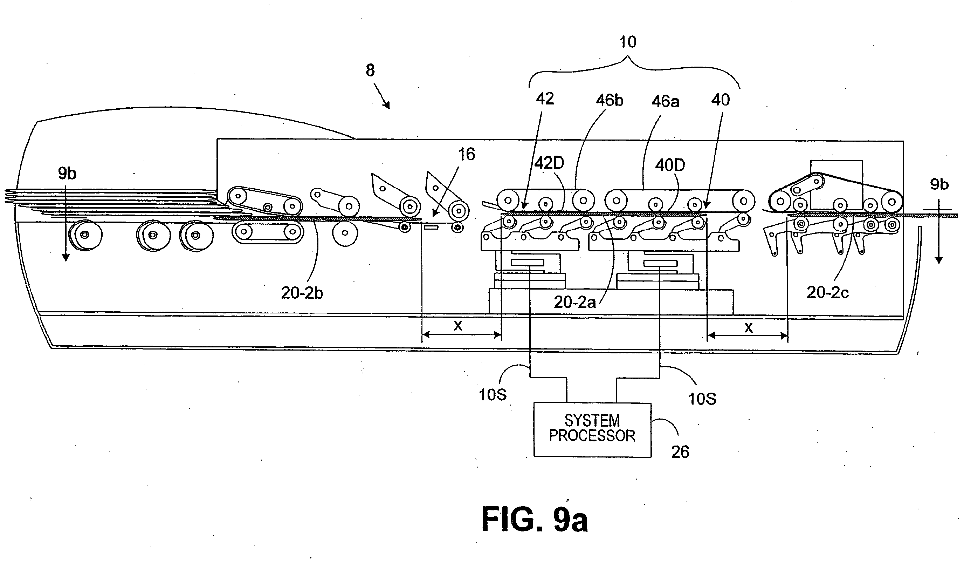

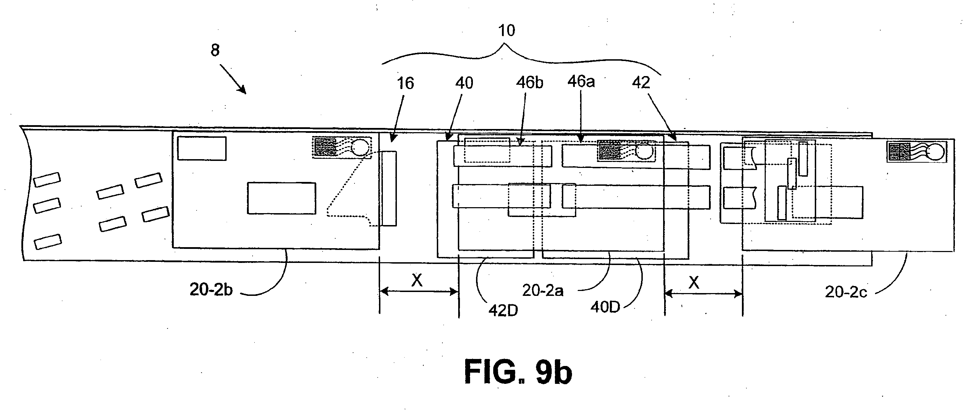

In a second operating mode depicted in Figs. 9a and 9b, the primary and secondary scale segments 40, 42 cooperate to weigh mailpieces 20-2a, 20-2b, 20-2c of a larger size or different configuration. In this operating mode, mailpieces 20-2a, 20-2b, 20-c of the second configuration, e.g., mailpieces employing large flats-type envelopes, are optimally spaced, however, the opportunity for large efficiency gains are mitigated by the larger size mailpiece envelopes which must be accommodated. That is, while the primary scale segment 40 can be optimally sized for use in the first operating mode i.e., accommodating a specific size/configuration mailpiece envelope, the secondary scale segment 42 must be sufficiently large to accommodate mailpiece envelopes having multiple sizes. Stated another way, while one of the scale segments can generally be optimized for a single size mailpiece envelope, the size of the combined decks 40D, 42D must be sufficiently large to accommodate a variety of configurations. As a result, the ability to space mailpieces without interfering with another processing station, i.e., the moistening/sealing and printing stations, decreases significantly.

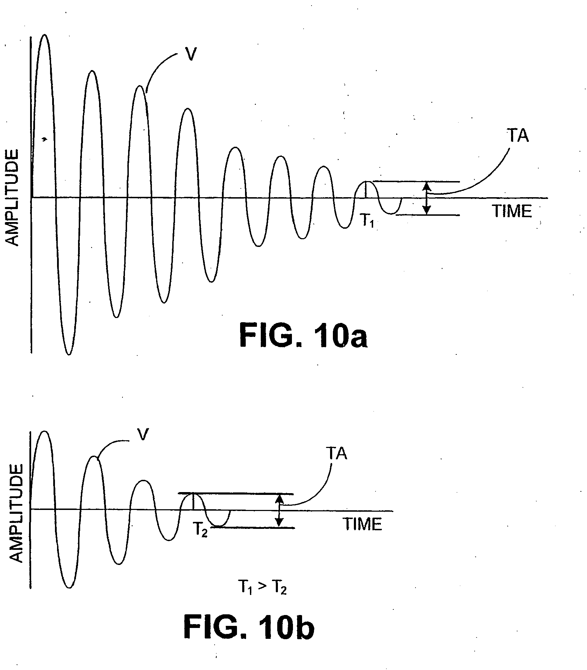

In addition to the benefits derived from the advantageous spatial relationship between mailpieces, the multi-segment weight measurement apparatus 10 decreases the settling period or time required for accurate weight measurement. In the background of the invention, it will be recalled that the single large transport deck required for processing mailpieces of various size, produces a large material mass in a spring-mass vibratory system. It will further be recalled, that the settling period, which is a function of the resonant frequency and amplitude of the spring-mass system, is elongated as the material mass increases. Figure 10a depicts the resonant response of a prior art weighing device wherein vibrations V dampen over a settling period T₁ before an accurate weight measurement can be recorded. That is, only when the amplitude of vibrations V diminishes to a threshold level TA will the system processor 26 of the mailing machine 8 take measurement readings and calculate mailpiece weight. In Fig. 10b, the resonant response of the multi-segment weighing apparatus 10 is depicted wherein vibrations V dampen over an abbreviated settling period T₂ due to the reduced mass of each of the scale segments 40, 42. That is, the time T₂ required for the amplitude of vibrations V to reach the threshold level TA diminishes such that T₂ is substantially less than T₁. Furthermore, the time required to record a weigh measurement is reduced which also reduces the time that an article/mailpiece must remain stationary on the transport deck 40D, 42D. As a result, the processing time or throughput efficiency is increased.

Inasmuch as the method for processing sheet material has been, to a large extent, described in the foregoing discussion of the inventive weight measurement apparatus 10, the method will be briefly summarized for the purposes of understanding those steps which are essential the inventive method. In the broadest sense, the method for processing sheet material includes the steps of (i) weighing mailpieces of a first configuration 20-1 on a primary scale segment 40, (ii) weighing mailpieces of a second configuration 20-2 on the primary and secondary scale segments 40, 42 such that the scale segments 40, 42 cooperate to weigh the mailpieces of the second configuration 20-2, and (iii) conveying the mailpieces of the first and second configurations 20-1, 20-2 along the processing path PPH to the respective scale segments depending upon which type of mailpiece is to be weighed.

The step of conveying mailpieces 20-1, 20-2 is controlled by the system processor 26 depending upon the operating mode of the sheet handling apparatus or mailing machine 8. These steps include, in one operating mode: staging mailpieces of the first configuration 20-1 on the secondary scale segment 42, and conveying the articles from the secondary scale segment 42 to the primary scale segment 40 to be weighed. In another operating mode, the method includes the step of positioning articles of the second configuration 20-2 on the primary and secondary scale segments 40, 42 for being weighed jointly by the scale segments 40, 42. While the inventive weighing apparatus 10 is shown having an upstream scale segment (i.e., segment 42) for staging articles/mailpieces in a first operating mode and for weighing larger articles/mailpieces in a second operating mode, the weighing apparatus 10 of the present invention may be adapted such that either of the scale segments 40, 42, i.e., the upstream or downstream, may weigh and or stage articles/mailpieces. That is, for example, in a first operating mode, an upstream scale segment may be used to weigh a mailpiece having a first configuration while a downstream scale segment stages mailpieces in advance of the print station 30. Similarly, in a second operating mode, both scale segments may cooperate to weigh mailpieces of a second (larger) configuration, a mailpiece spanning the combined length of both scale segments.

In summary, the inventive weighing apparatus and method for processing sheet material increases productivity while flexibly accommodating articles/mailpieces of varied size and shape. The weighing apparatus may be adapted/controlled to weigh articles/mailpieces of a first configuration while staging articles/mailpieces to minimize the spacing therebetween and optimize throughput efficiency. Furthermore, the weighing apparatus may be adapted/controlled to weigh articles/mailpieces of a second configuration (i.e., the articles/mailpieces being generally larger than those processed in the other operating mode) by combining the capability of the various scale segments (whether the number of segments is two, three, four etc.). Furthermore, by segmenting the weighing apparatus, other benefits are derived such as a reduction in the settling time. As previously discussed, throughput can be improved by shortening the time required to achieve/accept a weight measurement value.

It is to be understood that the present invention is not to be considered as limited to the specific embodiments described above and shown in the accompanying drawings. The illustrations merely show the best mode presently contemplated for carrying out the invention, and which is susceptible to such changes as may be obvious to one skilled in the art. The invention is intended to cover all such variations, modifications and equivalents thereof as may be deemed to be within the scope of the claims appended hereto.

## Claims

1. A weighing apparatus (10) to measure the weight of articles (20) fed along a processing path (PPH); comprising:
a primary scale segment (40,40',40-1) adapted to weigh articles of a first configuration (20-1);
at least one secondary scale segment (42,42',42-1,42-2) adapted to cooperate with the primary segment to weigh articles of a second configuration (20-2); and
a conveyor (44) for feeding articles of the first and second configurations along the processing path (PPH) to the scale segments;
wherein the conveyor (44) includes a separate conveyor segment (46a,46b) for each of the scale segments and wherein the conveyor segments are independently operable to vary the relative spacing between the articles (20) as they are fed along the processing path;
wherein the conveyor segment for the secondary scale segment stages articles of the first configuration (20-1) on the secondary scale segment (42,42',42-1,42-2) and moves the articles from the secondary scale segment (42,42',42-1,42-2) to the primary scale segment (40,40',40-1) to be weighed; and
wherein the weighing apparatus is adapted to weigh articles of the first configuration on the primary scale segment while staging articles on the secondary scale segment to minimize the spacing therebetween and optimize throughput efficiency.

2. The weighing apparatus according to claim 1 wherein the articles of the second configuration (20-2) are larger than the articles of the first configuration (20-1) in at least one dimension.

3. The weighing apparatus according to claim 1 or 2 wherein the conveyor transports and positions articles of the second configuration (20-2) on the primary (40,40',40-1) and secondary (42,42',42-1,42-2) scale segments for being weighed jointly by the scale segments (40,40',40-1; 42,42',42-1,42-2).

4. The weighing apparatus according to claim 1 or 2 wherein, in one operating mode, the conveyor stages articles of the first configuration (20-1) on the secondary scale segment (42,42',42-1,42-2) and moves the articles from the secondary scale segment (42,42',42-1,42-2) to the primary scale segment (40,40',40-1) to be weighed and, in another operating mode, the conveyor transports and positions articles of the second configuration (20-2) on the primary and secondary scale segments (40,40',40-1; 42,42',42-1,42-2) for being weighed jointly by the scale segments.

5. The weighing apparatus according to claim 1 wherein the conveyor segments (46a,46b) define a drive surface and wherein the drive surfaces thereof are substantially coplanar.

6. The weighing apparatus according to claim 1 or 5 wherein the primary scale segment (40,40',40-1) is downstream of the secondary scale segment (42,42',42-1, 42-2).

7. The weighing apparatus according to claim 1, 5 or 6 wherein a transport deck (42D) of the secondary scale segment (42) circumscribes a transport deck (40D) of the primary scale segment (40).

8. The weighing apparatus according to claim 1, 5 or 6 wherein a transport deck (42D') of the secondary scale segment (42') is adjacent to a transport deck (40D') of the primary scale segment (40') on at least two sides (S1,S2) thereof.

9. The weighing apparatus according to any preceding claim wherein the articles fed along the processing path (PPH) are mailpieces (20).

10. The weighing apparatus according to any preceding claim wherein each of the scale segments (40,40',40-1; 42,42',42-1,42-2) include:
a transport deck (40D,40D',42D,42D') having a plurality of rolling elements (50) to facilitate movement of the articles (20) along an upper surface of the deck;
a load cell connecting to an underside surface of the transport deck (40D,40D' 42D,42D'), the load cell including a spring means (60) for supporting the transport deck (40D,40D',42D,42D') and a means (62) for measuring the spring displacement against a force imposed thereon by the weight of an article (20);
a conveyor belt having a conveyor surface disposed over and opposing the transport deck and for capturing articles between the rolling elements (50) and the conveyor surface
a drive means connecting to and driving the conveyor belt, and
a controller for controlling the activation and speed of the drive means.

11. The weighing apparatus according to claim 10 wherein the spring means includes a cantilever spring (60) and the measuring means includes a strain gage (62) mounted to a surface of the cantilever spring for measuring the strain displacement of the spring.

## Patentansprüche

1. Wiegevorrichtung (10) zum Messen des Gewichts von Artikeln (20), die entlang eines Verarbeitungspfades (PPH) geführt werden; umfassend:
ein primäres Waagensegment (40, 40', 40-1), angepasst zum Wiegen von Artikeln einer ersten Konfiguration (20-1);
mindestens ein sekundäres Waagensegment (42, 42', 42-1, 42-2), angepasst, um mit dem primären Segment zusammen zu arbeiten, um Artikel einer zweiten Konfiguration (20-2) zu wiegen; und
einen Förderer (44), um Artikel der ersten und zweiten Konfiguration entlang des Verarbeitungspfades (PPH) den Waagensegmenten zu führen;
wobei der Förderer (44) ein separates Förderersegment (46a, 46b) für jedes der Waagensegmente beinhaltet und wobei die Förderersegmente unabhängig betreibbar sind, um den relativen Abstand zwischen den Artikeln (20) zu variieren, während sie entlang des Verarbeitungspfades geführt werden;
wobei das Förderersegment für das sekundäre Waagensegment Artikel der ersten Konfiguration (20-1) auf dem sekundären Waagensegment (42, 42', 42-1, 42-2) bereitstellt und die Artikel vom sekundären Waagensegment (42, 42', 42-1, 42- 2) zum primären Waagensegment (40, 40', 40-1) bewegt, damit sie gewogen werden; und
wobei die Wiegevorrichtung angepasst ist, um Artikel der ersten Konfiguration auf dem primären Waagensegment zu wiegen, während Artikel auf dem sekundären Waagensegment bereitgestellt werden, um den Abstand zwischen ihnen zu minimieren und die Durchsatzleistung zu optimieren.

2. Wiegevorrichtung nach Anspruch 1, wobei die Artikel der zweiten Konfiguration (20-2) größer sind als die Artikel der ersten Konfiguration (20-1) in mindestens einer Abmessung.

3. Wiegevorrichtung nach Anspruch 1 oder 2, wobei der Förderer Artikel der zweiten Konfiguration (20-2) auf das primäre (40, 40', 40-1) und sekundäre (42, 42', 42-1, 42-2) Waagensegment transportiert und positioniert, damit sie von den Waagensegmenten (40,40', 40-1; 42, 42', 42-1, 42-2) gemeinsam gewogen werden.

4. Wiegevorrichtung nach Anspruch 1 oder 2, wobei, in einem Betriebsmodus, der Förderer die Artikel der ersten Konfiguration (20-1) auf dem sekundären Waagensegment (42, 42', 42-1, 42-2) bereitstellt und die Artikel von dem zweiten Waagensegment (42, 42', 42-1, 42-2) zum primären Waagensegment (40, 40', 40-1) transportiert, damit sie gewogen werden, und, in einem anderen Betriebsmodus, der Förderer Artikel der zweiten Konfiguration (20-2) auf das primäre und sekundäre Waagensegment (40, 40', 40-1; 42, 42', 42-1, 42-2) transportiert und positioniert, damit sie gemeinsam von den Waagensegmenten gewogen werden.

5. Wiegevorrichtung nach Anspruch 1, wobei die Förderersegmente (46a, 46b) eine Antriebsfläche definieren und wobei die Antriebsflächen von diesen im Wesentlichen koplanar sind.

6. Wiegevorrichtung nach Anspruch 1 oder 5, wobei das primäre Waagensegment (40, 40', 40-1) dem sekundären Waagensegment (42, 42', 42-1, 42-2) nachgelagert ist.

7. Wiegevorrichtung nach Anspruch 1, 5 oder 6, wobei ein Transportdeck (42D) des sekundären Waagensegments (42) ein Transportdeck (40D) des primären Waagensegments (40) umschließt.

8. Wiegevorrichtung nach Anspruch 1, 5 oder 6, wobei ein Transportdeck (42D') des sekundären Waagensegments (42') an ein Transportdeck (40D') des primären Waagensegments (40') an mindestens zwei Seiten von diesem (S1, S2) angrenzt.

9. Wiegevorrichtung nach einem der vorstehenden Ansprüche, wobei die entlang des Verarbeitungspfades (PPH) geführten Artikel Poststücke (20) sind.

10. Wiegevorrichtung nach einem der vorstehenden Ansprüche, wobei jedes der Waagensegmente (40, 40', 40-1; 42, 42', 42-1, 42-2) beinhaltet:
ein Transportdeck (40D, 40D', 42D, 42D') mit einer Vielzahl von Wälzelementen (50), um eine Bewegung der Artikel (20) entlang einer oberen Oberfläche des Decks zu erleichtern;
eine Wiegezelle, die mit einer Unterseite des Transportdecks (40D, 40D' 42D, 42D') verbunden ist, wobei die Wiegezelle ein Federmittel (60) zum Tragen des Transportdecks (40D, 40D', 42D, 42D') und ein Mittel (62) zum Messen der Federverschiebung gegen eine Kraft, die durch das Gewicht eines Artikels (20) darauf ausgeübt wird, beinhaltet;
ein Förderband, das eine über und gegenüber dem Transportdeck angeordnete Förderfläche aufweist und zum Erfassen von Artikeln zwischen den Wälzkörpern (50) und der Förderfläche dient,
ein Antriebsmittel, das mit dem Förderband verbunden ist und es antreibt, und
eine Steuerung zum Steuern der Aktivierung und der Drehzahl des Antriebsmittels.

11. Wiegevorrichtung nach Anspruch 10, wobei das Federmittel eine Auslegerfeder (60) beinhaltet und das Mittel zum Messen einen Dehnungsmessstreifen (62) beinhaltet, welcher an einer Oberfläche der Auslegerfeder befestigt ist, um die Dehnungsverschiebung der Feder zu messen.

## Revendications

1. Appareil de pesage (10) pour mesurer le poids d'articles (20) acheminés le long d'un trajet de traitement (PPH) ; comprenant :
un segment de balance primaire (40, 40', 40-1) adapté pour peser des articles d'une première configuration (20-1) ;
au moins un segment de balance secondaire (42, 42', 42-1, 42-2) adapté pour coopérer avec le segment primaire pour peser des articles d'une deuxième configuration (20-2) ; et
un transporteur (44) pour acheminer des articles des première et deuxième configurations le long du trajet de traitement (PPH) jusqu'aux segments de balance ;
dans lequel le transporteur (44) comporte un segment de transporteur séparé (46a, 46b) pour chacun des segments de balance et dans lequel les segments de transporteur peuvent fonctionner indépendamment pour faire varier l'espacement relatif entre les articles (20) à mesure qu'ils sont acheminés le long du trajet de traitement ;
dans lequel le segment de transporteur pour le segment de balance secondaire place les articles de la première configuration (20-1) sur le segment de balance secondaire (42, 42', 42-1, 42-2) et déplace les articles du segment de balance secondaire (42, 42', 42-1, 42-2) au segment de balance primaire (40, 40', 40-1) pour être pesés ; et
dans lequel l'appareil de pesage est adapté pour peser des articles de la première configuration sur le segment de balance primaire tout en plaçant des articles sur le segment de balance secondaire afin de minimiser l'espacement entre eux et optimiser l'efficacité du débit.

2. Appareil de pesage selon la revendication 1, dans lequel les articles de la deuxième configuration (20-2) ont au moins une dimension plus grande que celle des articles de la première configuration (20-1).

3. Appareil de pesage selon la revendication 1 ou 2, dans lequel le transporteur transporte et positionne des articles de la deuxième configuration (20-2) sur les segments de balance primaire (40, 40', 40-1) et secondaire (42, 42', 42-1, 42-2) pour être pesés conjointement par les segments de balance (40, 40', 40-1 ; 42, 42', 42-1, 42-2).

4. Appareil de pesage selon la revendication 1 ou 2, dans lequel, dans un mode de fonctionnement, le transporteur place des articles de la première configuration (20-1) sur le segment de balance secondaire (42, 42', 42-1, 42-2) et déplace les articles du segment de balance secondaire (42, 42', 42-1, 42-2) au segment de balance primaire (40,40', 40-1) pour être pesés et, dans un autre mode de fonctionnement, le transporteur transporte et positionne des articles de la deuxième configuration (20-2) sur les segments de balance primaire et secondaire (40, 40', 40-1 ; 42, 42', 42-1, 42-2) pour être pesés conjointement par les segments de balance.

5. Appareil de pesage selon la revendication 1, dans lequel les segments de transporteur (46a, 46b) définissent une surface d'entraînement et dans lequel les surfaces d'entraînement de ceux-ci sont sensiblement coplanaires.

6. Appareil de pesage selon la revendication 1 ou 5, dans lequel le segment de balance primaire (40, 40', 40-1) est en aval du segment de balance secondaire (42, 42', 42-1, 42-2).

7. Appareil de pesage selon la revendication 1, 5 ou 6, dans lequel une plate-forme de transport (42D) du segment de balance secondaire (42) entoure une plate-forme de transport (40D) du segment de balance primaire (40).

8. Appareil de pesage selon la revendication 1, 5 ou 6, dans lequel une plate-forme de transport (42D') du segment de balance secondaire (42') est adjacente à une plate-forme de transport (40D') du segment de balance primaire (40') sur au moins deux de ses côtés (S1, S2).

9. Appareil de pesage selon l'une des revendications précédentes, dans lequel les articles acheminés le long du trajet de traitement (PPH) sont des envois postaux (20).

10. Appareil de pesage selon l'une des revendications précédentes, dans lequel chacun des segments de balance (40, 40', 40-1 ; 42, 42', 42-1, 42-2) comporte :
une plate-forme de transport (40D, 40D', 42D, 42D') ayant une pluralité d'éléments roulants (50) pour faciliter le déplacement des articles (20) le long d'une surface supérieure de la plate-forme ;
une cellule de pesage se reliant à une surface inférieure de la plate-forme de transport (40D, 40D', 42D, 42D'), la cellule de pesage comprenant un moyen à ressort (60) pour supporter la plate-forme de transport (40D, 40D', 42D, 42D') et un moyen (62) pour mesurer le déplacement du ressort contre une force qui lui est imposée par le poids d'un article (20) ;
une bande transporteuse ayant une surface de transport disposée sur la plate-forme de transport et opposée à celle-ci pour saisir des articles entre les éléments roulants (50) et la surface de transport,
un moyen d'entraînement se reliant à la bande transporteuse et entraînant celle-ci, et
un dispositif de commande permettant de commander l'activation et la vitesse du moyen d'entraînement.

11. Appareil de pesage selon la revendication 10, dans lequel le moyen à ressort comporte un ressort en porte-à-faux (60) et le moyen de mesure comporte un extensomètre (62) monté sur une surface du ressort en porte-à-faux pour mesurer le déplacement sous contrainte du ressort.
